Europäisches Patentamt

European Patent Office

Office européen des brevets

(11) Publication number: **0 385 762**
**A2**

# EUROPEAN PATENT APPLICATION

(21) Application number: **90302150.9**

(51) Int. Cl.5: **B29C 45/34, B29C 45/40**

(22) Date of filing: **28.02.90**

(30) Priority: **28.02.89 JP 45376/89**

(43) Date of publication of application:
**05.09.90 Bulletin 90/36**

(84) Designated Contracting States:
**CH DE ES FR GB IT LI**

(71) Applicant: **Citizen Watch Co. Ltd.**
**1-1, 2-chome, Nishi-Shinjuku**
**Shinjuku-ku Tokyo(JP)**

(72) Inventor: **Yabe, Isao**
**1122-11, Wakamatsu-cho**
**Tokorosawa-shi, Saitama-ken(JP)**
Inventor: **Shimada, Yoshihiro**
**Shimoshakuji 5-chome, Nerima-ku**
**Tokyo(JP)**
Inventor: **Noguchi, Keiji**
**6-8, Kumegawa-cho 5**
**Higashimurayama-shi, Tokyo(JP)**
Inventor: **Kaneko, Hiroyuji**
**Flower Heights 102, 28-29 Nishi 2-chome**
**Kunitachi-shi, Tokyo(JP)**

(74) Representative: **Bond, Bentley George et al**
**Haseltine Lake & Co. 28 Southampton**
**Buildings Chancery Lane**
**London WC2A 1AT(GB)**

(54) Injection molding apparatus.

(57) An injection molding apparatus is disclosed which comprises a stationary mold having an abutment surface and a movable mold having an abutment surface detachably mounted to the stationary mold such that the abutment surface of the stationary mold abuts the abutment surface of the removable mold. The abutment surfaces of the stationary and movable molds are shaped such that a cavity is formed therebetween and adapted to have resin filled thereinto. At least one ejector hole is formed in the lower one of the molds and opens into the cavity from below. The ejector pins are slidably mounted within the ejector holes and clearances are formed about the ejector pins within the ejector holes and provide passages for gas and air trapped in the cavity to be sucked from the cavity through the clearances and out through the exhaust passage.

## INJECTION MOLDING APPARATUS

### Field of the Invention

The present invention relates to an injection molding apparatus for injection molding of resin.

### Description of the Prior Art

Various plastic goods are produced on a large scale by way of molding resin. Such molding is carried out using either thermoplastic resin or heat-hardening resin as the raw product, and due to the properties of these raw products, both large and small plastic goods can be easily molded into intricate shapes.

While many resin molding techniques have been developed, the use of injection molding has become increasingly popular. As well-known, in injection molding, resin is delivered through a gate and into a cavity formed between a stationary mold and a movable mold. The use of this technique, however, has been found to incur the following problems.

First, air present in the cavity formed between the stationary mold and the movable mold becomes trapped in the cavity when resin is poured thereinto. Such air is compressed by the resin such that its temperature rises and it migrates to the outer extremities of the cavity. This causes air bubbles to be formed in the outer extremities of the cavity such that the plastic goods formed by this process generally include voids at or near the surface thereof. These voids often cause the resulting plastic goods to be fatally defective, especially when the goods are formed with intricate shapes or when the surface quality thereof is especially important.

Additionally, molten resin generates gas as it is poured into the cavity between the stationary and movable molds. This gas further contributes to the undesirable production of voids in finished plastic goods. Furthermore, the gas generated when the molten resin is filled into the cavity causes a tar-like substance (or resin residue) to adhere to the molds after the finished plastic goods have been removed from the molds, such that the molds must be washed after every use thereof. The presence of resin residue also requires that the relatively expensive molds be frequently replaced.

In order to avoid the above-mentioned problems, various apparatuses, such as those shown in Figures 3, 4(a), 4(b), 5 and 6, have been developed to remove the air and gas trapped in the cavity during pouring of the resin.

The apparatus shown in Figure 3 is disclosed in Japanese laid-open patent No. 62-273742; the apparatus shown in Figure 5 is disclosed in Japanese laid-open patent No. 60-182142; and the apparatus shown in Figure 6 is disclosed in Japanese laid-open patent No. 64-39737.

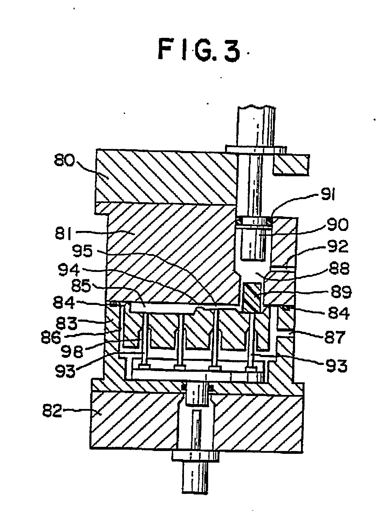

The apparatus shown in Figure 3 includes a stationary platen 80 having a stationary mold 81, and a movable platen 82 having a movable mold 83. A cavity 85, a gate 94, a runner 95 and a pot 88 are formed between the molds 81 and 83 when the molds 81 and 83 are in a closed or abutted condition, so that resin 89 can be filled into the cavity 85. A plunger 90 is mounted to the stationary mold 81 for injecting the resin 89 into the cavity 85, and includes a packing 91 about its periphery in order to hermetically seal the pot 88. A through path 92 is formed in the stationary mold 81 and opens into the side of the pot 88 to allow air and gas to be removed therethrough by means of a vacuum pump (not shown).

A packing 84 is mounted to the movable mold 83 at a surface thereof which abuts with the stationary mold 81 so as to hermetically seal cavity 85. An exhaust path 86 and a through path 87 are formed in the movable mold 83 and open into the cavity 85 by way of a small groove (not shown) formed in one of the abutting surfaces of the molds. The exhaust path 86 and through path 87 allow air and gas trapped in the cavity 85 to be removed by means of a vacuum pump (not shown).

Ejector pins 93 are slidably mounted in holes 98 formed in the movable mold 83 and are adapted to eject the finished plastic goods and any excess resin.

The operation of this injection molding apparatus shown in Figure 3 will now be described.

Figure 3 shows the stationary mold 81 and the movable mold 83 in a closed or abutted condition, with the pot 88 filled with resin 89. The plunger 90 is shown here with the packing 91 inserted in the pot 88 about the periphery of plunger 90.

Air and gas trapped in the cavity 85 and pot 88 are exhausted through the paths 87 and 92 by means of the vacuum pump. The plunger 90 is moved downward while the vacuum pump is operated so as to force the resin 89 into the cavity 85 through the runner 95 and the gate 94. After the resin has hardened, outside air is introduced through paths 87 and 92, and the stationary mold 81 and movable mold 83 are separated. The thus finished plastic good and any excess resin are then removed from the cavity by the ejector pins 93, thus completing one injection molding operation.

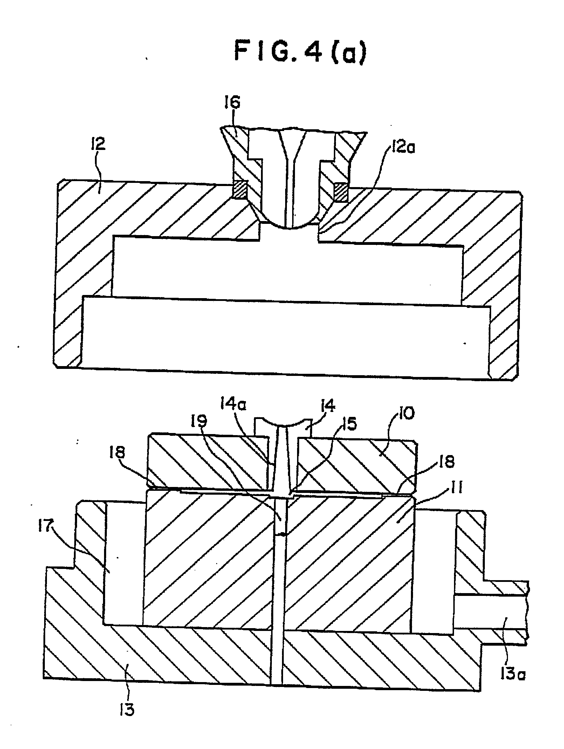

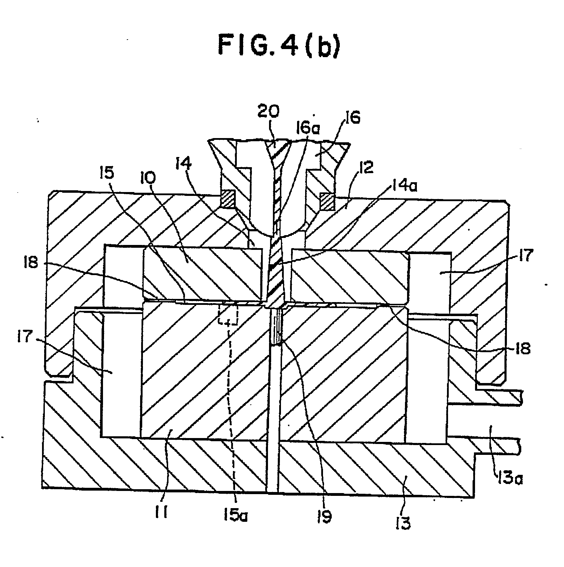

Another conventional injection molding apparatus is described with reference to Figures 4(a) and 4(b).

This injection molding apparatus includes a movable mold 10, a stationary mold 11, a stationary vacuum cup 12, a movable vacuum cup 13 and an injection cylinder 16. A cavity 15 is formed between the stationary mold 11 and the movable mold 10 in a shape necessary to form the desired plastic article. The molds 10 and 11 are mounted in the movable vacuum cup 13 which has a suction hole 13a formed through a side thereof and adapted for connection to a vacuum pump (not shown).

An ejector pin 19 is arranged in the lower part of the cavity 15 and is slidable upwardly and downwardly such that it is capable of passing through the bottom surface of the movable vacuum cup 13.

A sprue bushing 14, which has a gate 14a for passing resin 20 therethrough, is mounted to the movable mold 10. The injection cylinder 16 is mounted to the stationary vacuum cup 12 and the stationary vacuum cup 12 is adapted for removable mounting on the movable vacuum cup 12 in surrounding relation to the molds 10 and 11. A connecting portion 12a is constructed as an injection hole 16a of the injection cylinder 16 and can be connected with the sprue bushing 14. The operation of the injection molding apparatus shown in Figures 4(a) and 4(b) will now be described.

The operation begins with the movable vacuum cup 13 spaced downwardly from the stationary vacuum cup 12 and adapted to be moved by a cup elevating apparatus (not shown), and with the movable mold 10 spaced upwardly from the stationary mold 11 and adapted to be moved by an elevating apparatus (not shown).

Next, as shown in Figure 4(a), the movable mold 10 is moved to its mounted position on the stationary mold 11 by the mold elevating apparatus, and the sprue bushing 14 is connected with the cavity 15. An air path 18 connecting the cavity 15 with a chamber 17 (see Figure 4(b)) is formed between abutting surfaces of the movable mold 10 and the stationary mold 11.

The movable vacuum cup 13 is then moved upwardly by the cup elevating apparatus to mount the stationary vacuum cup 12 about both molds 10 and 11 such that they are disposed in the chamber 17 as shown in Figure 4(b).

Air and gas in the chamber 17 is exhausted through the suction hole 13a by means of a suction apparatus such as the vacuum pump or the like, which causes air and gas in the cavity 15 to be exhausted through the air path 18. The resin 20 is injected from the injection cylinder 16 while the suction apparatus is operating and is filled in the cavity 15 through the gate 14a. The suction apparatus is operated during filling of the cavity 15 such that air which flows into the cavity 15 with the resin 20 and gas generated from the resin 20 is exhausted through the air path 18. When the resin 20 in the cavity 15 has hardened, the movable vacuum cup 13 is moved downward by the cup elevating apparatus. The movable mold 10 is then moved upward by the mold elevating apparatus and the finished article is ejected from the cavity by upward movement of the ejector pin 19, thereby completing one injection molding operation.

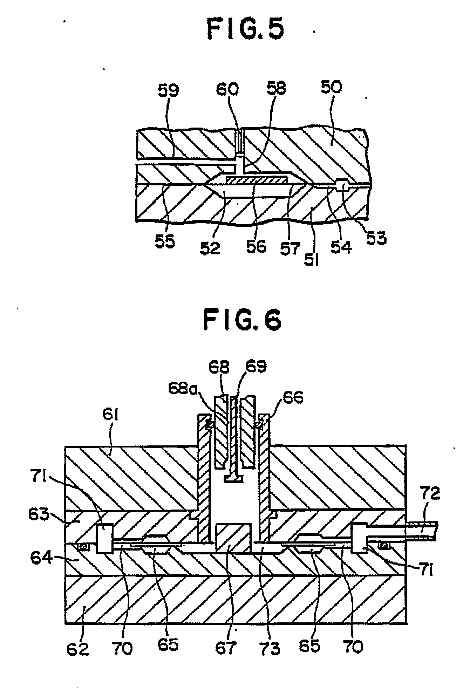

Another conventional molding apparatus will now be described with reference to Figure 5.

The apparatus shown in Figure 5 includes an upper mold 50, a lower mold 51 and a cavity 52 formed between the molds 50 and 51. A runner 53 and a gate 54 lead into the cavity 52 and a groove air vent 55 is formed between the abutting surfaces of the upper 50 and lower 51 molds and opens into cavity 52. The upper mold 50 has an air exhaust tube 58 formed therein and extending upwardly from an upper portion of the cavity 52. An exhaust tube 59 is also formed in the upper mold 50 and extends horizontally from the air exhaust tube 58. An ejector pin 60 is slidably mounted in the air exhaust tube 58. The air exhaust tube 58 opens into the cavity 52 at an end of the cavity 52 opposite the gate 54, and a lead frame 57, on which a semiconductor 56 is mounted, is positioned in the cavity 52.

In use of the injection apparatus described above, molten resin is filled into the cavity 52 under high pressure through the runner 53 and the gate 54. Air remaining in the cavity 52 after it is filled with molten resin is exhausted through the air vent 55 and air exhaust tubes 58 and 59.

After the finished article is removed from the molds, hardened resin remains in the air vent 55 and air exhaust tube 58. The resin remaining in the air vent 55 is removed by burring, and the resin remaining in the air exhaust tube 58 is removed by moving the ejector pin 60 within the tube 58.

Another conventional injection molding apparatus will now be described with reference to Figure 6.

The apparatus shown in Figure 6 includes molds 61 and 62 having cavity blocks 63 and 64, respectively. The mold 61 and cavity block 63 have a port 66 extending therethrough. A cavity 65, exhaust hole 70, exhaust path 71 and runner 73 are formed between the cavity blocks 63 and 64 when the cavity blocks are in a connected or abutting condition. A plunger 68 is arranged within the pot 66 and is adapted to move upwardly and downwardly for forcing resin from the pot 66 into the cavity 65.

The plunger 68 has a longitudinal exhaust path 68a formed centrally therethrough which can be opened or shut be means of a seal pin 69 which is movable up and down within the exhaust path 68a.

In use of the injection molding apparatus described above, molten resin 67 is injected into the pot 66 upon moving the molds into their abutting condition. Air and gas generated from the resin 67 in the cavity 65 and pot 66 are exhausted through the exhaust hole 70 and exhaust paths 71, 72 and 68a.

While the above-described conventional injection molding apparatuses do provide improvements over the earlier injection molding apparatuses, they are still plagued with various problems, as will be described below.

The apparatus shown in Figure 3 may exhaust air from the cavity 85 before and during filling of the resin 89 into the cavity 85, but, because the exhaust path 86 opening into the cavity 85 is a small groove which is formed between the abutting surfaces of the molds, it is difficult to completely exhaust air and gas from the cavity 85 when the cavity 85 is large or deep. As the vacuum pump used as the suction apparatus has a weak intake ability, it is time consuming to exhaust the air and gas completely from the cavity 85.

In the apparatus shown in Figure 4, air and gas in the cavity are exhausted through the air path 18 formed between the movable mold 10 and the stationary mold 11. If the cavity 15 is a thin cavity, such as shown in Figure 4(b), air may be exhausted completely, but, if the cavity 15 has a deep portion (such as shown by phantom lines at 15a), air and gas become entrapped in a bottom of the hollow portion 15a during filling of the resin 20.

Therefore, this injection molding apparatus, as well as the apparatus shown in Figure 3, is suitable for a mold having a thin cavity, but is unsuitable for a mold having a deep cavity. Furthermore, because this equipment requires the use of vacuum cups 12 and 13, the whole of the apparatus is of a relatively large scale.

In the apparatus shown in Figure 5, air and gas in the cavity 52 is exhausted through the air exhaust tube 58. The exhaust tube 58 is directly connected to the cavity 52, thereby causing the finished goods to have marks thereon conforming to the opening of the exhaust tube, as well as to any residual resin remaining in the mold.

This apparatus is therefore unsuitable as a mold for producing products such as IC cards which require a beautiful outer shape. Furthermore, because the air exhaust tube 58 opens into the upper mold 50, gas generated from the resin and having high specific gravity remains in the bottom of the cavity 52. If the air exhaust tube 58 was formed through the lower mold 51, the resin would flow into the air exhaust tube 58 on account of its weight. The resin may even flow into the air exhaust tube 59 if the intake power of the suction apparatus is too strong, thereby blocking the air exhaust tube 59.

In the apparatus according to Figure 6, air and gas in the cavity 65 and pot 66 are removed through the exhaust hole 70 and the exhaust paths 68a, 71 and 72. As the exhaust hole 70 is directly connected into the cavity 65, as with the above described apparatus, flaws will be formed on the surfaces of finished goods.

As the plunger 68 having the exhaust path 68a and seal pin 69 therethrough is needed for exhausting air and gas from the pot, the entire apparatus must be redesigned in order to prevent the inclusion of the above-mentioned surface flaws.

Summary of the Invention

Therefore, a first object of the present invention is to eliminate the above-described defects present in conventional injection molding apparatuses.

A second object is to provide an injection molding apparatus which is capable of completely exhausting air and gas generated from the resin and trapped in the cavity even when the cavity is large or deep or has an intricate shape.

A third object is to provide an injection molding apparatus which produces finished goods without surface flaws.

Such objects are achieved according to the present invention by an injection molding apparatus which comprises: a stationary mold having an abutment surface; a movable mold having an abutment surface detachably mounted to the stationary mold such that the abutment surface of the stationary mold abuts the abutment surface of the movable mold, the abutment surfaces of the stationary mold and the movable mold being shaped such that a cavity is formed therebetween which is adapted to have resin filled thereinto; means, formed in one of the stationary mold and the movable mold for guiding molten resin into the cavity, a lower one of the stationary mold and the movable mold having at least one ejector hole formed therethrough having an upper end thereof opening into the cavity from below; at least one injector pin slidably mounted in the at least one ejector hole, respectively, a clearance being formed about the at least one ejector pin within at least one ejector hole; and means for connecting the at least one ejector hole to a suction device to cause air and gas trapped in the cavity to be exhausted from the cavity through the at least one ejector hole. The suction device comprises a fitting adapted for connection with a compressed air source, the fitting comprising an exhaust path leading away from the molds and an inclined path with a first end adapted for connection to a compressed air source and a second end opening into the exhaust path and spaced from the first end in the direction away from the molds. The lower one of the stationary mold and the movable mold has at least one evacuation groove formed therein in parallel with and defining a widened portion of the at least one ejector hole, respectively, the at least one evacuation groove having an upper end spaced downwardly from the cavity and a lower end adapted for connection to the suction device. The at least one ejector hole opens into the cavity at a lowest portion thereof, and the at least one evacuation groove is spaced downwardly a distance equal to the diameter of the ejector pin slidably mounted in the ejector hole.

Brief Description of the Drawing Figures

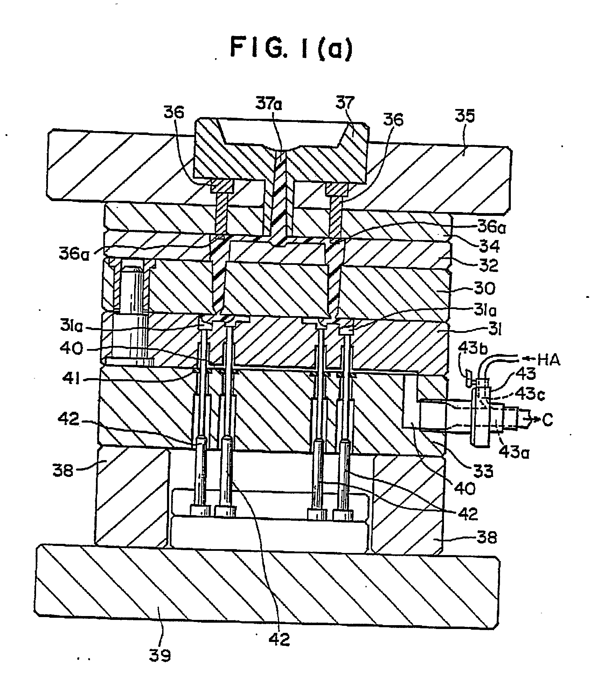

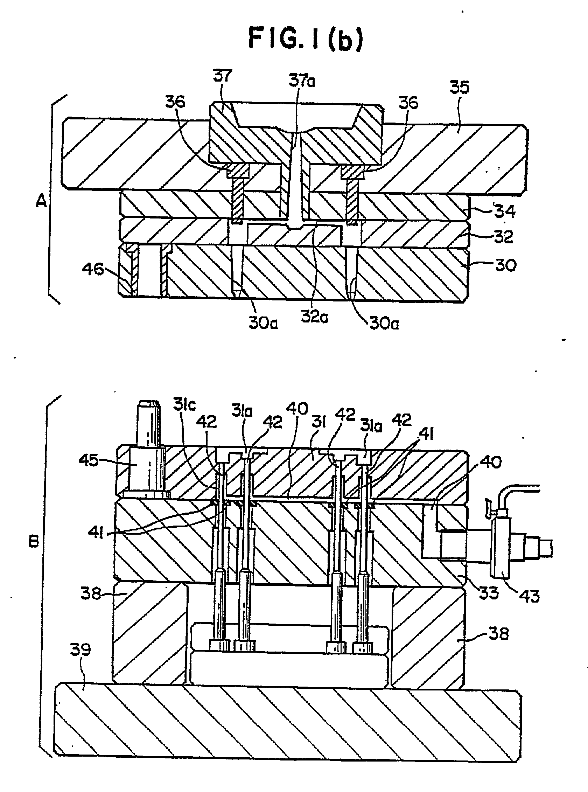

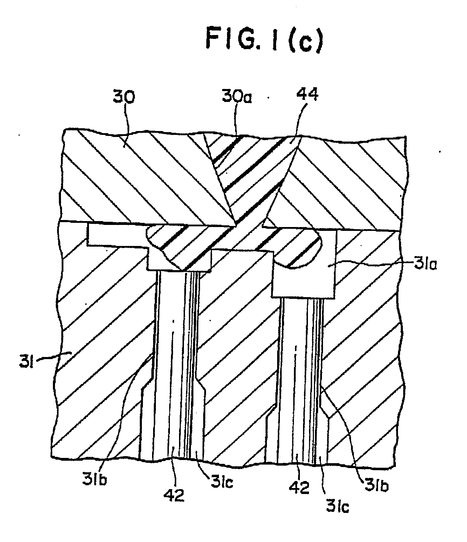

Figure 1(a) is a cross sectional elevation view of an injection molding apparatus according to a first embodiment of the present invention.

Figure 1(b) is a sectional view similar to that of Figure 1(a) but showing sections of the apparatus separated from one another.

Figure 1(c) is a sectional view of a portion of the apparatus shown in Figure 1(a).

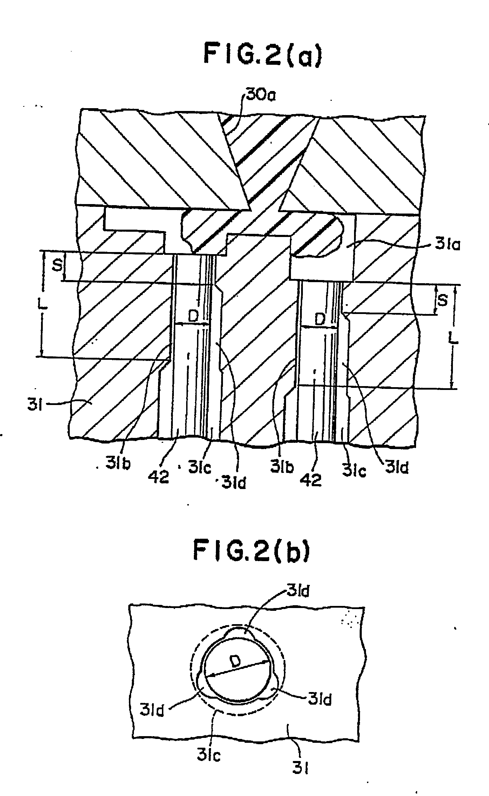

Figure 2(a) is a cross sectional elevation view of a portion of an apparatus according to a second embodiment of the present invention.

Figure 2(b) is a top plan view of the portion of the apparatus shown in Figure 2(a).

Figures 3, 4(a), 4(b) 5 and 6 are sectional views of conventional injection molding apparatuses.

DETAILED DESCRIPTION OF THE INVENTION

A first preferred embodiment of the present invention will now be described with reference to Figures 1(a)-1(c).

As shown in Figure 1(b) an injection molding apparatus according to the present invention comprises a stationary section (A) and a movable section (B). The stationary section (A) includes a stationary mold 30, a stationary receiving plate 32, a stripper plate 34, a stationary mount plate 35, a stripper pin 36, and a sprue bushing 37. The movable section (B) includes a movable mold 31, a movable receiving plate 33, a mounting plate 38, and a movable mount plate 39.

A cavity 31a is formed in the movable mold 31 between abutting surfaces of the movable mold 31 and a stationary mold 30. Ejector holes 31b are formed in the movable mold 31 and open into the cavity 31a from below. Ejector pins 42 are slidably disposed within ejector holes 31b and are movable by an ejector pin moving means (not shown).

Relief holes or evacuation grooves 31c are formed in parallel with and define widened portions of the ejector holes 31b. The evacuation grooves 31c have upper ends thereof spaced downwardly from the cavity 31a. The movable mold 31 is mounted on the movable receiving plate 33 and an exhaust hole 40 in communication with the ejector holes 31b is formed between the movable mold 31 and the movable plate 33. An end of the exhaust hole 40 is in communication with an intake device 43 (to be described later) mounted to the movable receiving plate 33. The movable receiving plate 33 is mounted on the mounting plate 38 which is, in turn, mounted on the movable mount plate 39. As shown in Figure 1(a), the intake device 43 includes a path (or passage) 43a connected to the exhaust hole 40 of the movable receiving plate 33 and an inclined through path (or through passage) 43c which has a first end adapted to connect with a compressed air source HA and a second end opening into the exhaust path and spaced from the first end in a direction away from the molds. Negative pressure is created in the exhaust hole 40 by the air from compressed air source HA flowing away from the molds such that air and gas may be exhausted C through path 43a. This type of intake apparatus 43 can instantaneously produce a large amount of suction compared to conventional vacuum pumps.

The rigid section (A) has a sprue bushing 37 with a sprue 37a formed therethrough, and a stripper pin 36 extending therefrom is mounted to the stationary plate 35. The sprue bushing 37 and stripper pins 36 extend through the stripper plate 34 into a runner 32a formed in the stationary receiving plate 32. A bottom portion 36a of each of the stripper pins 36 extend downwardly into a respective vertical portion of the runner 32a.

The rigid mold 30 has gates, 30a extending therethrough for guiding resin from the runner 32a to the cavity 31a.

A guide pin 45 is mounted to and extends upwardly from the movable mold 31 and is adapted to engage in a guide bushing 46 mounted in the stationary mold 30, when the stationary mold 30 and movable mold 31 are brought into abutting condition.

The stationary section (A) described above is mounted on a stationary body (not shown) of the injection molding apparatus. The stationary receiving plate 32 and the stripper plate 34 are constructed so as to be separable by means of an elevating apparatus (not shown). Similarly, the stripper plate 34 and stationary mounting plate 35 are adapted to be separated by means of an elevating apparatus (not shown). Furthermore, the entire movable section (B) is movable vertically by an elevating apparatus (not shown) of the stationary body of the injection molding apparatus.

The operation of the injection molding apparatus according to the first preferred embodiment of the present invention will now be described.

The apparatus is first held such that the stationary section (A) and the movable section (B) are separated as shown in Figure 1(b). The movable section (B) is moved by way of the elevating apparatus into a position mounted onto the stationary section (A) as shown in Figure 1(a). In this mounted position, the guide pin 45 is engaged in the guide bushing 46 and the cavity 31a is placed into communication with the gates 30a.

A valve 43b of the intake device is then opened so as to cause high pressure air from the compressed air source HA to flow through the path 43c into exhaust path 43a. This causes negative pressure to be developed in the exhaust hole 40, evacuation groove 31c and the ejector holes 31b which are in communication with a lower most portion of the cavity 31a, thereby sucking air and gas trapped in the cavity 31a through the ejector holes 31b, the evacuation grooves 31c and the exhaust hole 40 out through the exhaust path 43a.

Because the clearance provided within the ejector holes 31 about the ejector pins 42 is generally small, sucking of the air and gas from the cavity 31a through this clearance by way of conventional vacuum pumps is time consuming. However, the use of the intake apparatus such as 43 provides a much larger suction power so that the air and gas in the cavity 31a can be sucked therefrom in a relatively short period of time.

Next, an injection cylinder (not shown) is connected to the sprue bushing 37 and resin 44 is poured from the injection cylinder into the sprue 37a. The resin 44 flows through the sprue 37a, the runner 32a and gates 30a into the cavity 31a, as shown in Figure 1(c). Because the intake apparatus 43 is operated during pouring of the resin 44 into the sprue 37 and eventually into the cavity 31a, air and gas created in the cavity 31a during flow of the resin 44 are sucked from the cavity 31a and exhausted through the clearance formed about the ejector pins 42 within the ejector holes 31b, and exhausted through the exhaust hole 40 and exhaust path 43a.

Because the gas is removed from the cavity 31a, the gas does not cause resin residue to adhere within the ejector holes 31b, exhaust hole 40 and evacuation grooves 31c such that these passages remain clean. The number of washings and replacements of the molds is thereby decreased, such that work efficiency increases and maintenance costs decrease.

After the resin 44 in the cavity 31 has hardened into a finished article, the intake device 43 is deactivated by closing the valve 43b. The finished article (not shown) is then removed from the cavity 31a by upward movement of the ejector pins 42.

Although hardened residual resin generally is deposited and remains in the gates 30a, the runner 32a, the sprue 37a and on the bottom portions 36a of the stripper pins 36, it can be easily removed by respectively separating the stationary mold 30, the stationary receiving plate 32, the stripper plate 34, and the stationary mount plate 35.

As will be appreciated by those skilled in the art, the above-described injection molding operation is easily adaptable to automation.

A second preferred embodiment of the present invention will now be described with reference to Figures 2(a) and 2(b). Portions of the second embodiment which are the same as those of the first embodiment are represented by like reference numerals. In order to avoid redundancies, detailed descriptions of the like parts will be omitted.

In this embodiment, grooves 31d are formed in the movable mold 31 and extend from the evacuation grooves 31c upwardly toward the cavity 31a.

In order to reduce wear of the ejector pins 42 and the ejector holes 31b, the ejector holes 31b are designed to have lengths L above the evacuation grooves 31c equal to three times the diameter of the ejector pins 42. Furthermore, the upper ends of the grooves 31d are spaced from the cavity 31a a distances equal to the diameters D of the ejector pins 42. This distance has empirically been found to provide strong suction from the cavity 31a while preventing suction of resin into the ejector holes 31b.

It is desirable that a plurality of grooves 31d be formed at equal intervals about the periphery of the ejector hole 31b so as to provide uniform suction from the cavity 31a through the ejector holes 31b.

It is further noted that the ejector holes 31b preferably open into the lowermost portions of the cavity 31a.

As the air and gas generated from the resin in the cavity can be sucked through the clearance formed about the ejector pins within the ejector holes, the cavity may be kept in an essentially vacuum state. Therefore, the cavity can be completely filled with resin while formation of voids in the finished plastic goods is prevented.

Additionally, since air can be suced from the cavity through the ejector holes, the mold can be adapted to have the intake device connected thereto with only a slight change in design.

Because the clearances formed about the ejector pins within the ejector holes is very small, scarcely any flaws are formed on the surfaces of the finished goods. Therefore, the injection molding apparatus of the present invention is suitable for molding IC cards which requires a fine surface appearance.

Because the intake device utilized in the present invention provides stronger suction than conventional pumps, air and gas trapped in the cavity can be sucked through the narrow clearance formed about the ejector pins within the ejector holes within a very short time period.

Although resin may seep into the above-mentioned clearances, clogging will not occur becaue the ejector pins slide within the ejector holes so as to remove the resin residue.

## Claims

1. An injection molding apparatus, comprising:
a stationary mold having an abutment surface;
a movable mold having an abutment surface detachably mounted to said stationary mold such that said abutment surface of said stationary mold abuts said abutment surface of said movable mold, said abutment surfaces of said stationary mold and said movable mold being shaped such that a cavity is formed therebetween which is adapted to have resin filled thereinto;
means, formed in one of said stationary mold and said movable mold, for guiding molten resin into said cavity;
a lower one of said stationary mold and said movable mold having at least one ejector hole formed therethrough having an upper end thereof opening into said cavity from below;
at least one ejector pin slidably mounted in said at least one ejector hole, respectively, a clearance being formed about said at least one ejector pin within said at least one ejector hole; and
means for connecting said at least one ejector hole to a suction device to allow air and gas trapped in said cavity to be exhausted from said cavity through said at least one ejector hole.

2. An injection molding apparatus as recited in claim 1, wherein
said suction device comprises a fitting adapted for connection with a compressed air source.

3. An injection molding apparatus as recited in claim 2, wherein
said fitting comprises an exhaust passage leading away from said molds and an inclined passage with a first end adapted for connection to a compressed air source and a second end opening into said exhaust passage and spaced from said first end in a direction away from said molds.

4. An injection molding apparatus as recited in claim 3, wherein
said lower one of said stationary mold and said movable mold has at least one evacuation groove formed therein in parallel with and defining a widened portion of said at least one ejector hole, respectively, said at least one evacuation groove having an upper end spaced downwardly from said cavity and a lower end adapted for connection to the suction device.

5. An injection molding apparatus as recited in claim 4, wherein
said at least one ejector hole opens into said cavity at a lowest portion thereof.

6. An injection molding apparatus as recited in claim 4, wherein
said at least one evacuation groove is spaced downwardly from said cavity a distance equal to the diameter of the ejector pin slidably mounted in the corresponding ejector hole.

7. An injection molding apparatus as recited in claim 4, wherein
a plurality of said evacuation grooves are formed about said at least one ejector hole.

8. An injection molding apparatus as recited in claim 1, wherein
said lower one of said stationary mold and said movable mold has at least one evacuation groove formed therein in parallel with and defining a widened portion of said at least one ejector hole, respectively, said at least one evacuation groove having an upper end spaced downwardly from said cavity and a lower end adapted for connection to the suction device.

9. An injection molding apparatus as recited in claim 1, wherein
said guiding means comprises at least one gate opening through said abutting surface of an upper one of said stationary mold and said movable mold.

# FIG. I (a)

# FIG. 1 (b)

# FIG. I (c)

# FIG.2(a)

# FIG.2(b)

# FIG. 3

# FIG. 4 (a)

# FIG. 4 (b)

EP 0 385 762 A2

# FIG.5

# FIG.6